(19) **Europäisches Patentamt / European Patent Office / Office européen des brevets**

(11) **EP 2 027 487 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
*G01S 19/07* ^(2010.01)     *G01C 15/00* ^(2006.01)

(21) Anmeldenummer: **07725685.7**

(22) Anmeldetag: **30.05.2007**

(86) Internationale Anmeldenummer:
**PCT/EP2007/004796**

(87) Internationale Veröffentlichungsnummer:
**WO 2007/144071 (21.12.2007 Gazette 2007/51)**

(54) **BERECHNUNGSVERFAHREN FÜR NETZWERKSPEZIFISCHE GRÖSSEN IN EINEM NETZWERK AUS REFERENZSTATIONEN FÜR EIN SATELLITENBASIERTES POSITIONIERUNGSSYSTEM**

CALCULATION METHOD FOR NETWORK-SPECIFIC FACTORS IN A NETWORK OF REFERENCE STATIONS FOR A SATELLITE-BASED POSITIONING SYSTEM

PROCÉDÉ DE CALCUL POUR DES PARAMÈTRES SPÉCIFIQUES AU RÉSEAU DANS UN RÉSEAU DE STATIONS DE RÉFÉRENCE POUR SYSTÈME DE POSITIONNEMENT PAR SATELLITE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.06.2006 EP 06115386**

(43) Veröffentlichungstag der Anmeldung:
**25.02.2009 Patentblatt 2009/09**

(73) Patentinhaber: **Leica Geosystems AG 9435 Heerbrugg (CH)**

(72) Erfinder:
- **SEATOVIC, Dejan 8409 Winterthur (CH)**
- **ALVES, Paul Calgary, Alberta T3B 3G9 (CA)**
- **TAKAC, Frank 9436 Balgach (CH)**
- **EULER, Hans-Jürgen 9435 Heerbrugg (CH)**

- **ZEBHAUSER, Benedikt 9400 Rorschach (CH)**

(74) Vertreter: **Kaminski Harmann Patentanwälte Est. Austrasse 79 9490 Vaduz (LI)**

(56) Entgegenhaltungen:
**DE-A1- 19 537 923**

- **KEENAN C R ET AL: "Using the information from reference station networks: a novel approach conforming to RTCM V2.3 and future V3.0" IEEE 2002 POSITION LOCATION AND NAVIGATION SYMPOSIUM. (PLANS 2002). PALM SPRINGS, CA, APRIL 15 - 18, 2002, POSITION LOCATION AND NAVIGATION SYMPOSIUM, NEW YORK, NY : IEEE, US, 15. April 2002 (2002-04-15), Seiten 320-327, XP010590522 ISBN: 0-7803-7251-4**

Printed by Jouve, 75001 PARIS (FR)

**Beschreibung**

Die Erfindung betrifft ein Berechnungsverfahren für netzwerkspezifische Grössen in einem Netzwerk aus Referenzstationen für ein satellitenbasiertes Positionierungssystem nach Anspruch 1 und ein Computer programm produkt nach Anspruch 10.

Zur Positionsbestimmung werden gegenwärtig und in Zukunft globale oder satellitenbasierte Positionierungssysteme GNSS (z.B. GPS, GLONASS, GALILEO etc.) für viele Anwendungen genutzt. Aufgrund der physikalischen Bedingungen ist die erreichbare Positionsgenauigkeit beim Empfang durch eine isoliert betriebene Station begrenzt.

Beim differentiellen GNSS erfolgt die Positionsbestimmung einer mobilen Einheit, dem sogenannten Rover, durch Datenempfang und Datenmessung zu Satelliten so wie auch der Datenempfang von Datenmessungen von wenigstens einer Referenzstation. Da die Position der Referenzstation bekannt ist und diese ebenfalls die identischen Signale der Satelliten empfängt, können durch dieses differentielle Korrekturverfahren einige Ungenauigkeiten und, Fehler reduziert werden. Beispiele für solche Fehler sind ionosphärische, troposphärische oder aus den Satellitenbahnen herrührende geometrische Fehler. Durch differentielle Verfahren ist eine höhere Genauigkeit möglich als sie mit einem Rover ohne Referenzstation möglich wäre. Eine solche Station übermittelt dem Rover fortlaufend Daten aus den empfangenen Satellitensignalen. Je nach Ausgestaltung können dies Rohdaten oder bereits aufbereitete Daten sein. In der Praxis werden Referenzstationen jedoch meist nicht für jeden Messvorgang neu installiert, sondern es erfolgt eine Abstützung auf ein ganzes Netz festinstallierter Referenzstationen, die von verschiedenen Anwendern auch gleichzeitig genutzt werden können. So können von Netzwerken entweder Netzwerk-Korrekturparameter übertragen werden oder es werden aus den Messungen der Referenzstationen im Netzwerk Daten für virtuelle Referenzstationen berechnet, die einer in der Nähe des Rovers gelegenen Station entspricht. In der US 5,899,957 werden ein Verfahren und eine Vorrichtung zum Übertragen von GPS-Korrekturdistanzen für eine ausgewählte Region beschrieben. Das Dokument enthält zudem eine breite Übersicht über den Stand der Technik zu diesem Ansatz.

Ein Netzwerk aus Referenzstationen wird auch in Zebhauser B.E., Euler H.-J., Keenan C.R., Wübbena G. (2002), "A Novel Approach for the Use of Information from Reference Station Networks Conforming to RTCM V2.3 and Future V3.0", ION (US Institute of Navigation), National Technical Meeting 2002, San Diego beschrieben.

Solche Netzwerke weisen zumeist grosse Zahlen von Referenzstationen auf, für die eine gleichzeitige Datenverarbeitung aufgrund der begrenzten Rechenleistung, insbesondere bei PC-basierten Systemen, nicht möglich ist. Die Zahl der gleichzeitig prozessierbaren Stationen ist somit kleiner als die Gesamtzahl der Stationen eines Netzwerks. Deshalb wird ein Netzwerk zu Datenverarbeitungszwecken partitioniert, d.h. in Gruppen oder Cluster aus gemeinsam prozessierbaren Referenzstationen aufgeteilt, wobei die Zusammenstellung der Gruppen bestimmten Kriterien, z.B. hinsichtlich der auftretenden Fehler, genügen soll.

Die Referenzstationen einer Gruppe bzw. eines Clusters sollen zumeist nahe beieinander liegen, so dass die geographische Verteilung ein wesentliches Kriterium zur Aufteilung der Referenzstationen ist. Ein weiteres Kriterium stellt die Forderung dar, dass die geographische Verteilung bzw. die der Gruppe zugeordnete Fläche sphärische Form haben soll. Dabei werden gegenwärtig Gruppengrössen von 4 bis 8 Referenzstationen angestrebt, wobei diese Einschränkung als Kardinalitätsbedingung bezeichnet werden soll. Wird also bei der Aufteilung eine Gruppe erzeugt, deren Grösse innerhalb dieses vorgegebenen Spielraums liegt, erfolgt für diese Gruppe keine weitere Aufteilung. Im Extremfall kann statt eine Wertebereichs naturgemäss auch eine einzige Grösse vorgegeben werden, so dass nach der Aufteilung alle Gruppen -entsprechende Teilbarkeit vorausgesetzt - gleich gross sind.

Die Aufgabe der vorliegenden Erfindung besteht in der Bereitstellung eines verbesserten Berechnungsverfahrens für Korrekturinformationen für ein satellitenbasiertes Positionierungssystem.

Eine weitere Aufgabe besteht in der Ermöglichung einer automatischen oder dynamischen Aufteilung des Netzwerks aus Referenzstationen.

Eine weitere Aufgabe besteht in der Verbesserung der Robustheit des Netzwerks, insbesondere hinsichtlich des Ausfalls von Referenzstationen.

Diese Aufgaben werden erfindungsgemäss durch die kennzeichnenden Merkmale des Anspruchs 1 bzw. der abhängigen Ansprüche gelöst oder die Lösungen fortgebildet.

Die Erfindung betrifft ein Berechnungsverfahren für netzwerkspezifische Grössen in einem Netzwerk aus Referenzstationen für ein satellitenbasiertes Positionierungssystem nach Anspruch 1 und ein Computerprogrammprodukt zur Durchführung des Berechnungsverfahrens.

Aufgrund von Veränderungen im Netzwerk, wie beispielsweise dem Ausfall oder dem Ab-/Zuschalten von Referenzstationen, empfiehlt es sich, eine Aufteilung des Netzwerks erfindungsgemäss automatisch, insbesondere dynamisch auszugestalten. Veränderungen in der Netzwerkarchitektur bzw. Netzwerkfunktionalität kann dann zeitnah gefolgt werden. Dabei kann das erfindungsgemäss dynamische Aufteilen z.B. ereignisgesteuert oder mit einer festen Rate erfolgen. Zudem ist eine dynamische Aufteilung die Voraussetzung für eine Einbeziehung von mobilen Empfängereinheiten, sogenannten Rovereinheiten, in das Netzwerk. Da diese nicht statisch positioniert sind, ist eine entsprechend aktualisierbare und flexible Aufteilung erforderlich.

Die Aufteilung einer Gesamtheit von Referenzstationen zu Gruppen bzw. Clustern kann in seiner allgemeinen Form wie folgt ausgedrückt werden

Gegeben ist

- ein Satz $x$ von n Objekten bzw. Referenzstationen $(x_1,..., x_n)$=: $x$, im Fall von Punkten oder Orten im d-dimensionalen Raum gilt zudem $x_j = (x_{j1},...,x_{jd})$
- eine Kostenfunktion $H : \{1,..., k\}^n \to R$, die Kosten einer Zuordnung eines Objektes zu einer Gruppe ausdrückt, wobei die Zuordnung bezüglich der anderen Gruppenobjekte unähnlicher Objekte höhere Kosten als die Zuordnung ähnlicher Objekte verursacht.

Gesucht ist

- ein Zuordnungsvektor $c \in \{1,..., k\}^n$ mit
  o $c_j = j \leftrightarrow x_j$ wird der Gruppe $j$ zugeordnet
  o $c = \arg\min_c H(c|x)$

Sogenannte Clustering-Verfahren zur Bildung von Gruppen aus einer Verteilung von Objekten unterscheiden sich nach ihren Ansätzen zur Repräsentation der Objekte, z.B. vektoriell in einem euklidischen Raum oder in einer Distanzmatrix, der Wahl einer Kostenfunktion, z.B. L2-Norm oder Kullback-Leibler-Divergenz, sowie dem Optimierungs- bzw. Zuordnungsalgorithmus. Bekannte Ansätze sind beispielsweise k-Means-Clustering oder Principal Component Analysis.

Erfindungsgemäss wird das Netzwerk aus Referenzstationen als ein zusammenhängender und kantengewichteter Graph modelliert. in dem die Referenzstationen die mit Kanten verbundenen Knoten darstellen. In die den Kanten zugeordnete Gewichtsfunktion geht hierbei die Distanz der jeweils durch die Kante verbundenen Referenzstationen ein, wobei erfindungsgemäss insbesondere eine L2- bzw. euklidische Norm Verwendung finden kann. Grundsätzlich sind aber auch andere Normen oder in einem Verzeichnis abgelegte gemessene Distanzen verwendbar, wobei die Distanzen bereits mit Korrekturen versehen sein können. Zudem können in die Gewichtsfunktion weitere Grössen, wie z.B. Antennen- oder Empfangsparameter, Höhen der Referenzstationen, Anzahl der Messungen, Zahl der verwendeten Systeme, wie z.B. GLONASS, GPS, GALILEO etc., sowie topographiespezifische oder atmosphärische Parameter mit eingehen. Topographiespezifische Parameter sind abhängig sind von der Topographie zwischen den Referenzstationen, wie z.B. dem Vorhandensein von Bergen oder die Nähe zur einer Küste. Solche Grössen können bspw. aus digitalen Gelände- bzw. Höhenmodellen abgeleitet werden und beschreiben einen entsprechenden Einfluss, z.B. auf die Modellierung atmosphärischer Effekte. Atmosphärische Parameter können entweder aus lokalen Messungen für die Referenzstationen abgeleitet werden oder beschreiben die Verhältnisse für eine grössere Umgebung, in welcher die Referenzstationen liegen, gitter- bzw. flächenartig.

Bei der Erzeugung und Aufteilung des Graphens sind zwei Bedingungen zu beachten bzw. algorithmisch zu berücksichtigen. Zum einen muss als Startbedingung ein zusammenhängender Graph erzeugt werden, dies bedeutet, dass alle Knoten des Graphen unmittelbar oder mittelbar, d.h. über weitere Knoten und Kanten, miteinander verbunden sind, was als Konnektivitätsbedingung bezeichnet wird. Zum anderen sollen beim Aufteilen Gruppen einer bestimmten Zahl von Objekten bzw. Referenzstationen erzeugt werden, wobei diese Zahl einem vorgegebenen Wertebereich entsprechen muss. Diese Bedingung wird als Kardinalitätsbedingung bezeichnet.

Zur Erzeugung des zusammenhängenden Graphen werden anfänglich grundsätzlich alle Knoten mit Kanten verbunden, wobei jedoch bereits Vorauswahlen berücksichtigt werden können, welche die Zahl der tatsächlichen Verbindungen reduziert. Ein Beispiel für eine solche konnektive Vorauswahl, welche vor allem in Hinblick auf Rechenzeitoptimierungen von Relevanz ist, fordert, dass bei Vorgabe einer geeigneten Distanzschwelle die Konnektivitätsbedingung gilt und ein zusammenhängender Graph entsteht, ohne jeweils trivialerweise jeden Knoten mit allen anderen Knoten durch Kanten zu verbinden. Im Regelfall werden zum Erzeugen des verbundenen Graphen alle Knoten miteinander durch Kanten verbunden, deren Distanz unterhalb dieser Distanzschwelle liegt. Erfüllt die Distanzschwelle die Konnektivitätsbedingung für ein gegebenes Netzwerk, folgt ein Graph, der verbunden ist und damit alle Knoten mittelbar oder unmittelbar, d.h. über weitere Knoten, miteinander verbindet. Eine typische Grösse für diese Distanzschwelle stellen hierbei 70 km dar. Wird die Distanzschwelle zu gross gewählt, so ist die Zahl der zu berechnenden Kanten zu hoch, wird sie hingegen zu klein gewählt, so kann es vorkommen, dass kein zusammenhängender Graph entsteht und damit die Konnektivitätsbedingung verletzt bzw. nicht eingehalten wird. Die Distanzschwelle kann somit bei durchschnittlich 70 km, aber auch bis zu 100 km oder darüber liegen. Letzteres z.B. für Netze, in welchen Trägerphasenbeobachtungen ausgewertet und deren ganzzahlige Mehrdeutigkeiten in Echtzeit - also mit maximal wenigen Minuten Verzögerung - bestimmt werden müssen. Im Fall von Netzen ohne die Bestimmung solcher ganzzahligen Mehrdeutigkeiten aus der Auswertung von Trägerphasenbeobachtungen und Netzen nur mit Auswertung von anderen Beobachtungen als Trägerphasen, also z.B. Codephasenbeobachtungen, kann diese Distanzschwelle auch ein Vielfaches dieser Grössen betragen, so typischerweise 150 oder 300 km. Eine automatische Bestimmung kann also abhängig von der Verfügbarkeit von Beobachtungstypen, d.h. den Observablen, und/oder von den zu generierenden Datenprodukten dieser Netzwerke erfolgen. Eine einfache Verknüpfung stellt dabei eine Referenztabelle mit Distanzschwellen und zugeordneten Werten für verfügbare Beobachtungstypen bzw. zu generierenden Datenprodukten dar. Je nach vorhandenen Observablen oder zu realisierenden Datenprodukten wird dann die Distanzschwelle ausgewählt.

Geeignete Grössen zur Ableitung von entsprechenden Datenprodukten und berechenbaren Kriterien für Distanzschwellen werden im Stand der Technik diskutiert.

So wird die Ableitung einer Korrelationsdistanz, bezogen auf den Fehlereinfluss der ionosphärischen Refraktion, in Skone S. H. (2001), "The impact of magnetic storms on GPS receiver performance", Journal of Geodesy 75 (2001) 9/10, 457-468 beschrieben.

Die Bestimmung entfernungsabhängiger Fehler und damit eine zur Ableitung bzw. Festlegung der Distanzschwelle geeignete Grösse sowie Hinweise auf die Lösbarkeit von Trägerphasenmehrdeutigkeiten werden in Wübbena, Bagge, Seeber, Böder, Hankemeier (1996), "Reducing Distance Dependent Errors for Real-Time Precise DGPS Applications by Establishing Reference. Station Networks", Paper presented at ION 96, Kansas City und Georgiadou Y. & Kleusberg A. (1988), "On the effect of ionospheric delay on geodetic relative GPS positioning", 1987, manuscripta geodetica (1988) 13: 1-8 geoffenbart.

Der so erzeugte zusammenhängende und kantengewichtete Graph wird nachfolgend partitioniert, also in Gruppen von Referenzstationen aufgeteilt, wobei je nach Zahl von Referenzstationen und gewählter Kardinalitätsbedingung einige wenige bis sehr viele Aufteilungsschritte durchzuführen sind, bis alle Gruppen die Kardinalitätsbedingung erfüllen.

Als erster Schritt nach der Erzeugung werden im Graphen Kanten entfernt, indem ein minimaler Spannbaum abgeleitet wird. Hierfür eignen sich verschiedene Ansätze, wobei erfindungsgemäss aufgrund des Laufzeitverhaltens insbesondere Greedy-Ansätze, welche jeweils die lokal beste Lösung auswählen, Verwendung finden. Beispiele hierfür sind die Algorithmen von Prim oder Kruskal, wie sie z.B. in "Introduction to Algorithms" von Thomas H. Cormen, Charles E. Leiserson, Ronald L. Rivest, Clifford Stein, The MIT Press, 2nd Edition, ISBN: 0262032937, Seiten 567-573 beschrieben werden.

Die Verwendung von minimalen Spannbäumen hat einige Vorzüge

- Partitionieralgorithmen für minimale Spannbäume sind schnell ($O(|E|\log|V|)$),
- die Aufteilung kann in einem Durchlauf erfolgen,
- Kardinalitäts- und Konnektivitätsbedingungen können einfach bzw. mit geringem Aufwand integriert werden.

Aus dem abgeleiteten minimalen Spannbaum wird dann die Kante mit dem höchsten Gewicht entfernt, sofern die dann entstehenden Teilbäume die untere Grenze der Kardinalitätsbedingung nicht unterschreiten. Die hierdurch entstandenen Teilbäume werden dann, sofern sie die obere Grenze der Kardinalitätsbedingung überschreiten, nach dem gleichen Prinzip solange weiter aufgeteilt, bis für alle der schliesslich entstehenden Teilbäume die Kardinalitätsbedingung erfüllt ist. Teilbäume, welche dieser Bedingung genügen, repräsentieren die durch die Aufteilung festzulegenden Gruppen von Referenzstationen. Das Aufteilungsverfahren endet, wenn alle Teilbäume die Kardinalitätsbedingung erfüllen oder wenn eine weitere zulässige Aufteilung nicht mehr erfolgen kann, z.B. wenn ein oder mehrere verbliebene und aufzuteilende Teilbäume nicht mehr unter Einhaltung der Kardinalitätsbedingung geteilt werden können. Dies ist beispielsweise der Fall, wenn ein Teilbaum 9 Knoten enthält und die Kardinalitätsbedingung Gruppen einer Stärke von 5 Knoten als untere Grenze und 7 Knoten als oberer Grenze fordert

Um solche Situationen von aufzuteilenden Teilbäumen zu vermeiden, deren Knotenzahl grösser als die obere Grenze der Kardinalitätsbedingung ist, die jedoch nicht unter Unterschreitung der unteren Grenze der Kardinalitätsbedingung aufteilbar wären, kann als weiteres Kriterium eine Wahl der Kardinalitätsbedingung gemäss

$$\frac{n_{\max}}{2} \geq n_{\min}$$

erfolgen, wobei $n_{\max}$ die obere Grenze und $n_{\min}$ die untere Grenze der Kardinalitätsbedingung bezeichnen. Die Anwendung dieser Regel führt dazu, dass entstehende Teilbäume soweit partitioniert werden können, bis diese der Kardinalitätsbedingung genügen.

Nach der Aufteilung erfolgt für die Gruppen die separate Berechnung von gruppenspezifischen Korrekturgrössen, welche nachfolgend zum Ableiten von netzwerkspezifischen Korrekturparametern wieder zusammengeführt werden. Ein Ansatz hierfür ist die Verwendung von Referenzstationen, die mehr als einer Gruppe zugeordnet werden bzw. zu dieser gehören. Hierfür wird beim Entfernen einer Kante eine der beiden durch diese Kanten verbundenen Stationen als zu beiden der entstandenen Gruppen bzw. Teilbäumen gehörig betrachtet und entsprechend in der Berechnung von Korrekturparametern berücksichtigt.

Das erfindungsgemässe Berechnungsverfahren wird nachfolgend anhand von in der Zeichnung schematisch dargestellten Ausführungsbeispielen rein beispielhaft näher beschrieben. Im einzelnen zeigen

Fig.1    eine schematische Darstellung der Übertragung von Korrekturen mit einem Netzwerk von Referenzstationen;

Fig.2.    eine Beispiel eines zu aufzuteilenden Netzwerks aus Referenzstationen;

Fig.3 eine schematische Darstellung der Erzeugung eines zusammenhängenden, kantengewichteten Graphen für das Netzwerk;

Fig.4 eine schematische Darstellung des Ableitens eines minimalen Spannbaums für den das Netzwerk repräsentierenden Graphen;

Fig.5-6 eine schematische Darstellung des Partitionierens des minimalen Spannbaums;

Fig.7 eine schematische Darstellung eines realen Beispiels eines in Gruppen aufzuteilenden Netzwerks aus Referenzstationen;

Fig.8 eine Darstellung des in Gruppen aufgeteilten Netzwerks aus Referenzstationen des realen Beispiels und

Fig.9 eine schematische Darstellung der Bestimmung von Referenzstationen, die beim Aufteilen wenigstens zwei Gruppen zugehörig sind.

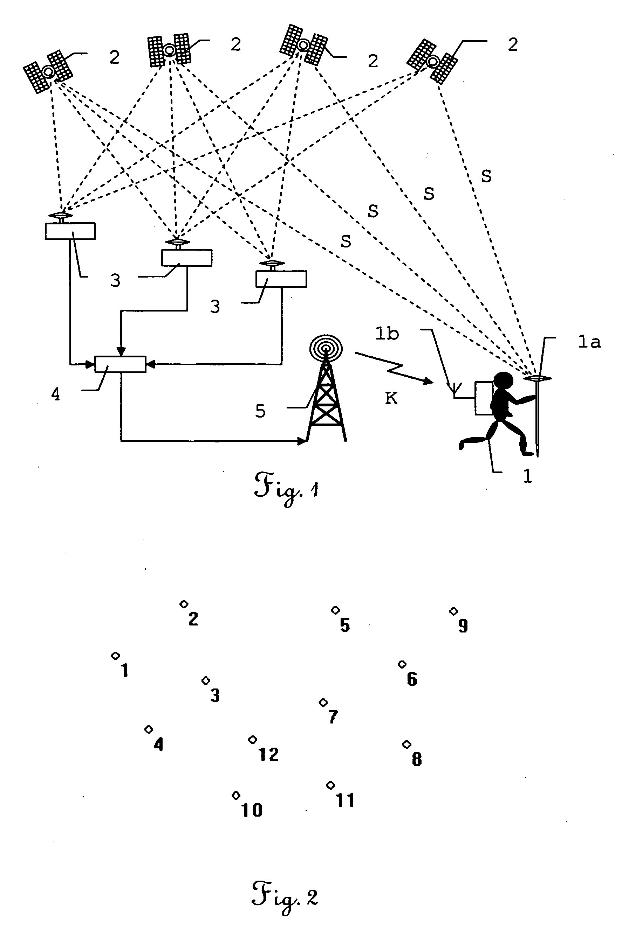

In Fig.1 wird schematisch die Berechnung und Übertragung von Korrekturen K aus einem Netzwerk von Referenzstationen 3 zu einer mobilen Rovereinheit 1 als Empfangseinheit nach dem Stand der Technik dargestellt. Sowohl die Rovereinheit 1 als auch die Referenzstationen empfangen Satellitensignale S von Satelliten 2 eines globalen Positionierungssystems. Die im Netzwerk empfangenen Satellitensignale S werden lokal bzw. in Gruppen verarbeitet und als gruppenspezifische Korrekturen zu einer zentralen Recheneinheit 4 weitergeleitet. Dort erfolgt eine Berechnung von netzwerkspezifischen Korrekturen K, wobei die netzwerkspezifischen Korrekturen K nachfolgend von einem Sender 5 einer Sendeeinheit an einen Empfänger 1a der Rovereinheit 1 übertragen werde. Die empfangenen netzwerkspezifischen Korrekturen K dienen dort zur Erhöhung der Positionsgenauigkeit auf Basis der von einem Satellitenempfänger 1a der Rovereinheit 1 empfangenen Satellitensignale S. Trotz der hier gewählten Darstellung eines Netzwerks mit einem Sender 4 und unidirektionaler Kommunikation ist das erfindungsgemässe Berechnungsverfahren auch für bidirektionale Kommunikation geeignet.

Fig.2 zeigt eines aus Anschaulichkeitsgründen vereinfachten Beispiels eines in Gruppen aufzuteilenden Netzwerks aus zwölf durchnumerierten Referenzstationen. Die Kardinalitätsbedingung soll Gruppen von 2 bis 4 Referenzstationen als zulässig festlegen. Die Konnektivitätsbedingung wird in diesem Fall exemplarisch mit 70 km festgelegt.

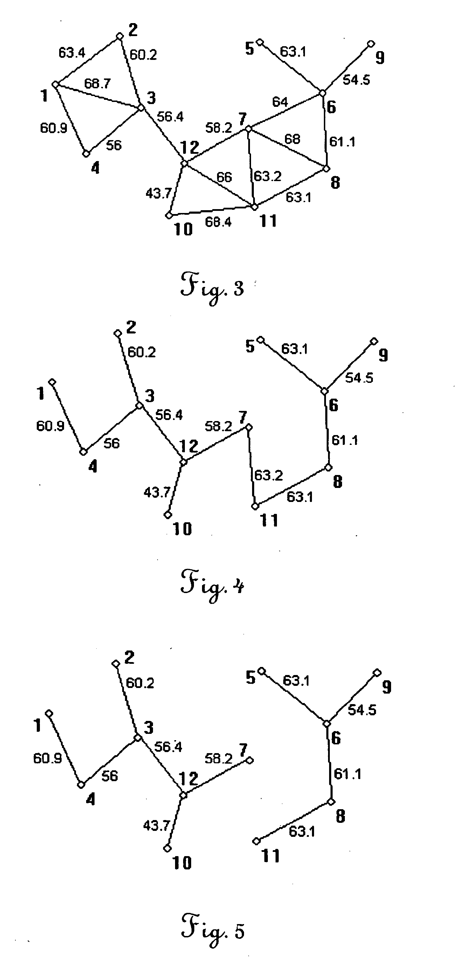

Der erste Schritt des Berechnungsverfahrens mit der Erzeugung eines zusammenhängenden, kantengewichteten Graphen für das Netzwerk erfolgt in Fig.3 in schematischer Darstellung. Alle Referenzstationen repräsentierenden Knoten, welche weniger als 70 km entfernt sind, werden mit Kanten verbunden, die hier in diesem Beispiel als Gewicht die Entfernung zwischen den Knoten tragen. Angegeben wird die euklidische Distanz, weitere Parameter, wie z.B. atmospärische, antennenseitige oder geographische Einflüsse können ebenfalls in die Gewichtsfunktion eingehen, werden hier aber aus Anschaulichkeitsgründen nicht dargestellt. Das Ergebnis des ersten Schrittes ist damit ein zusammenhängender, kantengewichteter Graph, wobei als Gewichtsfunktion nur die Entfernung betrachtet wurde.

In Fig.4 wird das Ableiten eines minimalen Spannbaums für den das Netzwerk repräsentierenden Graphen schematisch dargestellt. In diesem Beispiel wird von Knoten 1 ausgehend mit dem aus dem Stand der Technik bekannten Algorithmus von Prim ein minimaler Spannbaum abgeleitet. Zur Durchführung wird jeweils um die bereits zum entstehenden Spannbaum gehörenden Knoten eine äussere Begrenzung gezogen und aus allen diese Begrenzung kreuzenden Kanten wird diejenige mit dem geringsten Gewicht zur Erweiterung des Spannbaums gewählt. Der mit dieser Kante verbundene Knoten wird dem Spannbaum hinzugefügt. In diesem Beispiel kreuzen drei Kanten einen imaginären Ring um Knoten 1, von denen die Kante zu Knoten 4 mit 60,9 das geringste Gewicht aufweist, so dass Knoten 4 mit der entsprechenden Kante dem Spannbaum hinzugefügt wird. Eine um Knoten 1 und 4 gezogene Linie kreuzen nun zwei der ursprünglichen drei Kanten sowie die Kante zwischen Knoten 4 und 3 mit dem Gewicht 56. Da diese die Kante mit dem niedrigsten Gewicht besitzt, wird diese zusammen mit Knoten 3 dem Spannbaum hinzugefügt. Da Knoten 1 und 3 über Knoten 4 verbunden sind, kann die direkte Kante zwischen den Knoten 1 und 3 entfernt werden. Nach diesem fortschreitendem Ansatz wird der minimale Spannbaum abgeleitet, wobei jedoch auch andere Ansätze, wie z.B. auch andere Greedy-Verfahren, wie beispielsweise der Algorithmus von Kruskal erfindungsgemäss anwendbar sind.

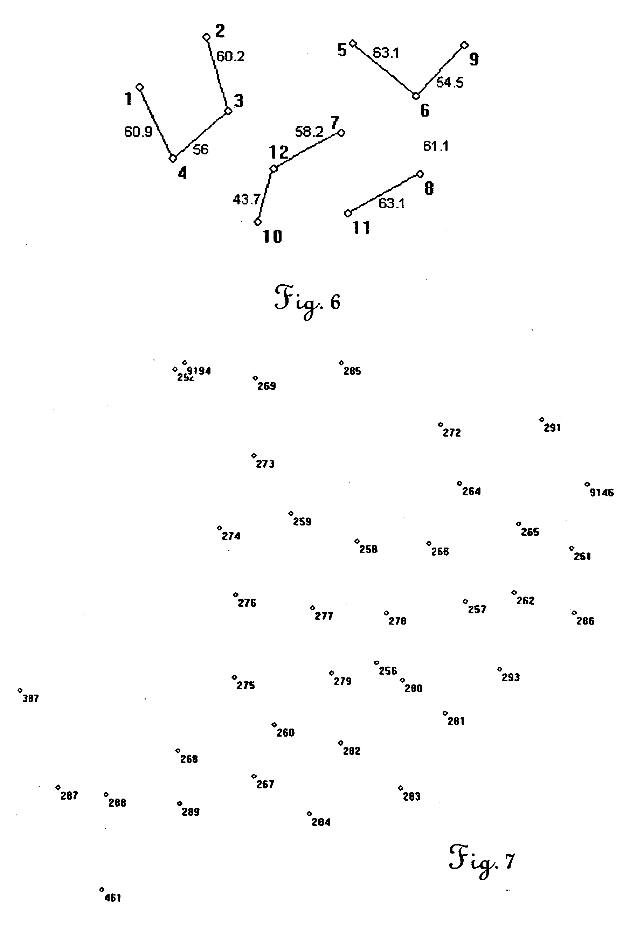

Fig.5 erläutert das Partitionieren des minimalen Spannbaums anhand einer schematischen Darstellung. Im Graphen wird die Kante mit dem höchsten Gewicht identifiziert, in diesem Beispiel die Kante zwischen den Knoten 7 und 11, welche ein Gewicht von 63,2 aufweist. Da beide durch die Entfernung der Kante entstehenden Teilbäume mit einer Knotenzahl von 5 und 7 noch nicht die Kardinalitätsbedingung erfüllen, werden diese weiter unterteilt, was Fig.6 veranschaulicht.

Im linken Teilbaum wird die Kante mit dem Gewicht von 56,4 zwischen Knoten 3 und 12 entfernt, da die zwar schwereren Kanten mit dem Gewicht von 60,9 zwischen den Knoten 1 und 4, dem Gewicht 60,2 zwischen Knoten 2 und 3, und schliesslich mit dem Gewicht 58,2 zwischen den Knoten 12 und 7 nicht entfernt werden können, ohne dass die dann entstehenden Graphen die Kardinalitätsbedingung verletzen oder nicht weiter partitionierbar sind. Das heisst, eine Kante darf genau dann entfernt werden, wenn sie die schwerste Kante ist, welche nach Entfernung zu Teilbäumen führt, die entweder die Kardinalitätsbedingung erfüllen oder weiter partitionierbar sind. Die durch Entfernen der Kante mit dem Gewicht 56,4 resultierenden beiden Gruppen besitzen eine Zahl von 4 und 3 Knoten, so dass die Kardinalitätsbedingung für beide Teile erfüllt ist und keine weitere Partitionierung mehr erforderlich ist.

Für den rechten Teilbaum stellt die Kante mit dem Gewicht von 61,1 ebenfalls nicht die schwerste Kante dar. Sie ist jedoch die schwerste Kante, welche entfernt werden kann, ohne entweder die Kardinalitätsbedingung zu verletzen, oder welche dann weiter partitionierbare Graphen hinterlässt. Das Entfernen der Kante führt in diesem Fall zu zwei Gruppen mit 2 und 3 Knoten, was in beiden Fällen der Kardinalitätsbedingung genügt. Durch die Repräsentation als Graph und die nachfolgende algorithmische Partitionierung kann ein Netzwerk aus Referenzstationen automatisch aufgeteilt werden. Insbesondere ist eine ständige bzw. wiederholte und damit dynamische Anpassung des Netzwerks an aktuelle Betriebszustände möglich, indem das Berechnungs- bzw. dessen Aufteilungsschritt mit nachfolgender Berechnung von gruppen- und netzwerkspezifischer Korrekter wiederholt durchgeführt wird.

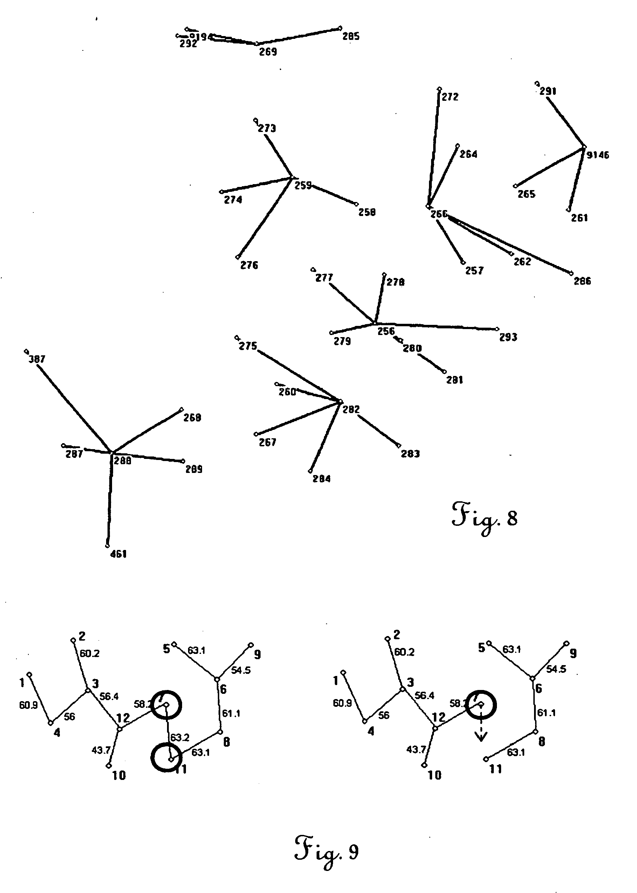

Fig.7 zeigt ein reales Beispiel eines in Gruppen aufzuteilenden Netzwerks mit einer grösseren Zahl von Referenzstationen, welches das deutsche Bundesland Bayern abdeckt und das in Fig.8 in aufgeteiltem Zustand gezeigt wird. Die Höhenverteilung der Referenzstationen wurde vernachlässigt und die jeweils gezeigten Verbindungslinien zu einer Zentralstation in jeder Gruppe dienen nur der Veranschaulichung.

Fig.9 stellt die Bestimmung von Referenzstationen, die beim Aufteilen wenigstens zwei Gruppen zugehörig sind, anhand eines Beispiels dar. Hierzu wird beim Partitionieren des minimalen Spannbaums bei jedem Teilungsschritt einer der beiden Knoten einer zu entfernenden Kante beiden resultierenden Teilbäumen zugeordnet, so dass Verknüpfungen zwischen den Teilbäumen und damit auch den Gruppen entstehen, die in Hinblick auf die Berechnung netzwerkspezifischer Korrekturen wieder ein Zusammenführen der gruppenspezifischen Korrekturen erlauben. In der Fig.9 wird im linken Teilbild die Kante mit dem Gewicht 63,2 zwischen den Knoten 7 und 11 entfernt. Von den beiden Knoten wird, wie im rechten Teilbild angedeutet, der Knoten 7 als zu beiden Gruppen gehörig betrachtet und rechnerisch prozessiert. Die Berücksichtigung solcher "überzähliger" Knoten, die zu mehreren Teilbäumen bzw. Gruppen gehören, kann sowohl noch während des Partitionierungsvorgangs, beispielsweise durch Anpassung der Kardinalitätsbedingung, oder erst nach erfolgter Aufteilung stattfinden, z.B. indem die gemeinsamen Knoten erst nach der Aufteilung auch ihrer jeweiligen zweiten Gruppe zugeordnet werden. In letzterem Fall muss der Partitionierungsalgorithmus der multiplen Zugehörigkeit keinerlei Rechnung tragen.

Trotz der gewählten systemspezifischen Beispiele ist das Verfahren grundsätzlich auch für beliebige satellitenbasierte Positionierungssysteme, wie z.B. GPS, Galileo oder GLONASS, erfindungsgemäss verwendbar.

## Patentansprüche

1. Korrekturberechnungsverfahren für ein satellitenbasiertes Positionierungssystem mit einem Netzwerk aus Empfangseinheiten als Referenzstationen und einem

   - Aufteilen des Netzwerks in Gruppen von Referenzstationen,
   - Berechnen gruppenspezifischer Korrekturgrössen,
   - Zusammenführen der gruppenspezifischer Korrekturgrössen,
   - Ableiten netzwerkspezifischer Korrekturparameter, wobei beim Aufteilen
   - die Referenzstationen durch Knoten in einem zusammenhängenden, kantengewichteten Graphen repräsentiert werden, bei dessen Erzeugung in die Gewichtsfunktion dieser Kante die Entfernung der durch diese Kante verbundenen Knoten eingeht,
   - aus dem Graphen ein minimaler Spannbaum abgeleitet wird, insbesondere nach den Algorithmen von Prim oder Kruskal,
   - der minimale Spannbaum zur Festlegung der Gruppen partitioniert wird, indem aus einem Baum jeweils die Kante mit dem höchsten Gewicht eliminiert wird, deren Eliminierung zu Teilbäumen führt, die jeweils entweder

   o einer Kardinalitätsbedingung für die Zahl der Knoten, insbesondere mit einer unteren Grenze $n_{min}$ und einer oberen Grenze $n_{max}$, in den beiden resultierenden Teilbäumen genügen oder
   o eine Knotenzahl grösser als die Kardinalitätsbedingung aufweisen.

2. Korrekturberechnungsverfahren nach Anspruch 1, **dadurch gekennzeichnet, dass** eine zwei Knoten verbindende Kante nur generiert wird, wenn die Entfernung zwischen den Knoten, insbesondere deren euklidische Distanz, eine vorgegebene Distanzschwelle nicht überschreitet.

3. Korrekturberechnungsverfahren nach Anspruch 2, **dadurch gekennzeichnet, dass** im Graphen alle Kanten, welche die Distanzschwelle nicht überschreiten, generiert werden

4. Korrekturberechnungsverfahren nach einem der Ansprüche 2 oder 3, **dadurch gekennzeichnet, dass** die Distanzschwelle in Abhängigkeit von einer Verfügbarkeit von Beobachtungsdaten und/oder von zu generierenden Datenprodukten des Netzwerks automatisch bestimmt wird.

**5.** Korrekturberechnungsverfahren nach einem der vorangehenden Ansprüche,
**dadurch gekennzeichnet, dass**
in die Gewichtsfunktion

- Parameter der Referenzstationen,
- aus Beobachtungsdaten der Referenzstationen abgeleitete Parameter,
- topographiespezifische Parameter und/oder
- atmosphärische Parameter
eingehen.

**6.** Korrekturberechnungsverfahren nach einem der vorangehenden Ansprüche,
**dadurch gekennzeichnet, dass**
als Kardinalitätsbedingung die Zahl der zulässigen Knoten im Bereich von 4 bis 8 liegt.

**7.** Korrekturberechnungsverfahren nach einem der vorangehenden Ansprüche,
**dadurch gekennzeichnet, dass**
die Kardinalitätsbedingung so gewählt wird, dass

$$\frac{n_{\max}}{2} \geq n_{\min} \quad \text{gilt.}$$

**8.** Korrekturberechnungsverfahren nach einem der vorangehenden Ansprüche,
**dadurch gekennzeichnet, dass**
beim Aufteilen wenigstens eine Referenzstationen wenigstens zwei Gruppen zugeordnet wird.

**9.** Korrekturberechnungsverfahren nach einem der vorangehenden Ansprüche,
**dadurch gekennzeichnet, dass**
wenigstens ein Teil der Empfangseinheiten des Netzwerks mobile Empfangseinheiten sind.

**10.** Computerprogrammprodukt als Aufzeichnung auf einem Datenträger oder als elektromagnetische Trägerwelle mit Codesequenzen, mit denen das Korrekturberechnungsverfahren nach einem der Ansprüche 1 bis 9 durchgeführt wird, wenn das Produckt auf einem Computer laüfr.

## Claims

**1.** Correction calculation method for a satellite-based positioning system having a network comprising reception units as reference stations and

- splitting of the network into groups of reference stations,

- calculation of group-specific correction variables,
- combination of the group-specific correction variables,
- derivation of network-specific correction parameters,
wherein the splitting involves
- the reference stations being represented by nodes in a cohesive, edge-weighted graph, production of which involves the distance of the nodes connected by this edge being incorporated into the weight function for this edge,
- a minimum spanning tree being derived from the graph, particularly on the basis of Prim's or Kruskal's algorithms,
- the minimum spanning tree being partitioned in order to stipulate the groups by eliminating from a tree the respective edge with the highest weight whose elimination results in subtrees which respectively either
o meet a cardinality condition for the number of nodes, particularly with a lower limit $n_{min}$ and an upper limit $n_{max}$, in the two resulting subtrees or
o have a number of nodes greater than the cardinality condition.

**2.** Correction calculation method according to Claim 1,
**characterized in that**
an edge connecting two nodes is generated only if the distance between the nodes, particularly the euclidean distance thereof, does not exceed a prescribed distance threshold.

**3.** Correction calculation method according to Claim 2,
**characterized in that**
all the edges which do not exceed the distance threshold are generated in the graph.

**4.** Correction calculation method according to either of Claims 2 and 3,
**characterized in that**
the distance threshold is determined automatically on the basis of availability of observation data and/or data products to be generated in the network.

**5.** Correction calculation method according to one of the preceding claims,
**characterized in that**
the weight function incorporates

- parameters of the reference stations,
- parameters derived from observation data for the reference stations,
- topography-specific parameters and/or
- atmospheric parameters.

**6.** Correction calculation method according to one of the preceding claims,

**characterized in that**
as the cardinality condition the number of admissible nodes is in the range from 4 to 8.

7. Correction calculation method according to one of the preceding claims,
**characterized in that**
the cardinality condition is chosen such that $\dfrac{n_{max}}{2} \geq n_{min}$ is true.

8. Correction calculation method according to one of the preceding claims,
**characterized in that**
the splitting involves at least one reference station being associated with at least two groups.

9. Correction calculation method according to one of the preceding claims,
**characterized in that**
at least some of the reception units in the network are mobile reception units.

10. Computer program product as a recording on a data storage medium or as an electromagnetic carrier wave with code sequences which are used to carry out the correction calculation method according to one of Claims 1 to 9 when the product is running on a computer.

**Revendications**

1. Procédé de calcul de correction pour un système de positionnement par satellites, avec un réseau composé d'unités réceptrices faisant office de stations de référence et une

- subdivision du réseau en groupes de stations de référence,
- calcul de grandeurs de correction spécifiques à des groupes,
- réunion des grandeurs de correction spécifiques à des groupes,
- déduction de paramètres de correction spécifiques au réseau, sachant que, lors de la subdivision,
- les stations de référence sont représentées par des noeuds dans un graphe à arcs pondérés, connexe, lors de la génération duquel, dans la fonction poids de cet arc, la distance d'éloignement des noeuds reliés par cet arc est impliquée,
- à partir du graphe, un arbre recouvrant minimal est déduit, en particulier selon les algorithmes de Prim ou Kruskal,
- l'arbre recouvrant minimal est subdivisé pour la fixation des groupes, en ce que, à partir d'un arbre, on élimine chaque fois l'arc ayant le poids le plus grand, dont l'élimination mène à des arbres partiels qui, soit
o satisfont à une condition de cardinalité pour le nombre des noeuds, en particulier avec une imite inférieure $n_{min}$ et une limite supérieure $n_{max}$, dans les deux arbres partiels résultants, soit
o présentent un nombre de noeuds supérieur à la condition de cardinalité.

2. Procédé de calcul de correction selon la revendication 1,
**caractérisé en ce qu'**
un arc, reliant deux noeuds, n'est généré que si la distance d'éloignement entre les noeuds, en particulier leur distance euclidienne, ne dépasse pas un seuil de distance prédéterminé.

3. Procédé de calcul de correction selon la revendication 2,
**caractérisé en ce que**,
dans le graphe, tous les arcs, qui ne dépassent pas le seuil de distance, sont générés.

4. Procédé de calcul de correction selon l'une des revendications 2 ou 3, **caractérisé en ce que**
le seuil de distance est déterminé automatiquement en fonction d'une disponibilité de données d'observation et/ou de produits de données, à générer, du réseau.

5. Procédé de calcul de correction selon l'une des revendications précédentes, **caractérisé en ce que**

- des paramètres des stations de référence,
- des paramètres dérivés de données d'observation des stations de référence,
- des paramètres spécifiques à la topographie et/ou
- des paramètres atmosphériques,
sont impliqués dans la fonction poids.

6. Procédé de calcul de correction selon l'une des revendications précédentes, **caractérisé en ce que**, en tant que condition de cardinalité, le nombre des noeuds admissibles est dans la fourchette comprise entre 4 et 8.

7. Procédé de calcul de correction selon l'une des revendications précédentes, **caractérisé en ce que**
la condition de cardinalité est choisie de manière que : $\dfrac{n_{max}}{2} \geq n_{min}$ .

8. Procédé de calcul de correction selon l'une des revendications précédentes, **caractérisé en ce que**, lors de la subdivision, au moins une station de référence est associée à au moins deux groupes.

9. Procédé de calcul de correction selon l'une des revendications précédentes, **caractérisé en ce qu'** au moins une partie des unité réceptrices du réseau sont des unités réceptrices mobiles.

10. Produit-programme informatique en tant qu'enregistrement sur un support de données ou en tant qu'onde porteuse électromagnétique avec des séquences de code, à l'aide desquelles le procédé de calcul de correction selon l'une des revendications 1 à 9 est mis en oeuvre, lorsque le produit fonctionne sur un ordinateur.

Fig. 1

Fig. 2

Fig. 3

Fig. 4

Fig. 5

**2**

60.2

**1**

**3**

60.9

56

**4**

**5** 63.1 **9**

54.5

**6**

58.2 **7**

**12**

61.1

43.7

**8**

**10**

**11** 63.1

*Fig. 6*

9194
285
252
269

272
291

273

264
9146

259
274
265
258
266
261

276
257
262
277
278
286

256
275
279
280
293

387
281

260
282

268

267
283

287
288
289
284

*Fig. 7*

461

Fig. 8

Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5899957 A

### In der Beschreibung aufgeführte Nicht-Patentliteratur

- A Novel Approach for the Use of Information from Reference Station Networks Conforming to RTCM V2.3 and Future V3.0. **Zebhauser B.E. ; Euler H.-J. ; Keenan C.R. ; Wübbena G.** National Technical Meeting. US Institute of Navigation, 2002
- **Skone S. H.** The impact of magnetic storms on GPS receiver performance. *Journal of Geodesy,* 2001, vol. 75 (9/10), 457-468
- **Wübbena ; Bagge ; Seeber ; Böder ; Hankemeier.** *Reducing Distance Dependent Errors for Real-Time Precise DGPS Applications by Establishing Reference. Station Networks,* 1996
- **Georgiadou Y. ; Kleusberg A.** On the effect of ionospheric delay on geodetic relative GPS positioning. *manuscripta geodetica,* 1987, vol. 13, 1-8
- **Thomas H. Cormen ; Charles E. Leiserson ; Ronald L. Rivest ; Clifford Stein.** Introduction to Algorithms. The MIT Press, 567-573